(19) Europäisches Patentamt
European Patent Office
Office européen des brevets

(11) **EP 0 982 951 B1**

(12) **EUROPEAN PATENT SPECIFICATION**

(45) Date of publication and mention
of the grant of the patent:
**26.12.2018 Bulletin 2018/52**

(51) Int Cl.:
***H04N 19/103*** *(2014.01)*    ***H04N 19/176*** *(2014.01)*
***H04N 19/147*** *(2014.01)*

(21) Application number: **99402099.8**

(22) Date of filing: **23.08.1999**

(54) **Picture compression process**

Verfahren zur Bildkompression

Procédé de compression d'images

(84) Designated Contracting States:
**DE FR GB IT**

(30) Priority: **28.08.1998 FR 9810802**

(43) Date of publication of application:
**01.03.2000 Bulletin 2000/09**

(73) Proprietor: **Thomson Licensing**
**92130 Issy-les-Moulineaux (FR)**

(72) Inventors:
• **Thoreau, Dominique**
**92100 Boulogne Billancourt (FR)**
• **Ruellou, Pierre**
**92100 Boulogne Billancourt (FR)**

(74) Representative: **Rolland, Sophie et al**
**InterDigital CE Patent Holdings**
**20, rue Rouget de Lisle**
**92130 Issy-les-Moulineaux (FR)**

(56) References cited:
EP-A- 0 514 865    EP-A- 0 782 344
FR-A- 2 691 272    US-A- 5 461 421

• LEE Y ET AL: "Towards MPEG4: An improved H.263-based video coder" SIGNAL PROCESSING. IMAGE COMMUNICATION, vol. 10, no. 1-3, 1 July 1997 (1997-07-01), page 143-158 XP004082705
• KOK C W ET AL: "Video coding with adaptive block update" PROCEEDINGS OF 1997 IEEE INTERNATIONAL SYMPOSIUM ON CIRCUITS AND SYSTEMS. CIRCUITS AND SYSTEMS IN THE INFORMATION AGE. ISCAS '97 (CAT. NO.97CH35987), PROCEEDINGS OF 1997 IEEE INTERNATIONAL SYMPOSIUM ON CIRCUITS AND SYSTEMS. CIRCUITS AND SYSTEMS IN TH, pages 1113-1116 vol.2, XP002104369 ISBN 0-7803-3583-X, 1997, New York, NY, USA, IEEE, USA
• YUEN-WEN LEE ET AL: "Efficient RD optimized macroblock coding mode selection for MPEG-2 video encoding" PROCEEDINGS. INTERNATIONAL CONFERENCE ON IMAGE PROCESSING (CAT. NO.97CB36144), PROCEEDINGS OF INTERNATIONAL CONFERENCE ON IMAGE PROCESSING, SANTA BARBARA, CA, USA, 26-29 OCT. 1997, pages 803-806 vol.2, XP002104370 ISBN 0-8186-8183-7, 1997, Los Alamitos, CA, USA, IEEE Comput. Soc, USA
• SUN H ET AL: "MPEG CODING PERFORMANCE IMPROVEMENT BY JOINTLY OPTIMIZING CODING MODE DECISIONS AND RATE CONTROL" IEEE TRANSACTIONS ON CIRCUITS AND SYSTEMS FOR VIDEO TECHNOLOGY, vol. 7, no. 3, 1 June 1997 (1997-06-01), pages 449-458, XP000690583

EP 0 982 951 B1

**Description**

The invention concerns a picture compression process in which each picture or picture macroblock is subjected to a coding chosen from among several coding types.

It relates more particularly to the MPEG2 compression process. Although the invention is not limited to this type of compression, in the description hereafter, we shall refer mainly to this type.

Recalled below is the principle of such compression and, at this juncture, the coding types which must be selected for each macroblock will be indicated.

In the MPEG2 standard, it is possible to start from a picture containing in progressive mode 576 lines of 720 points each. In interlaced mode, this picture is composed of two frames each of which comprises 288 lines, also of 720 points each.

Each picture is split up into macroblocks, each of which is formed by a square of 16x16 luminance points. Each macroblock is thus formed of 4 square blocks of 8x8 luminance points. With each of these 4 luminance blocks there are associated (in the 4.2.0 format) two chrominance blocks each of which has 8x8 points, one of the blocks representing the colour difference or red chrominance signal Cr and the other block representing the colour difference or blue chrominance signal Cb. In the 4.2.2 format, with each luminance macroblock there are associated four 8x8 chrominance blocks, 2 blocks for the blue chrominance and 2 blocks for the red chrominance. There is also a 4.4.4 format in which each of the luminance and chrominance components each comprises 4 blocks of 8x8.

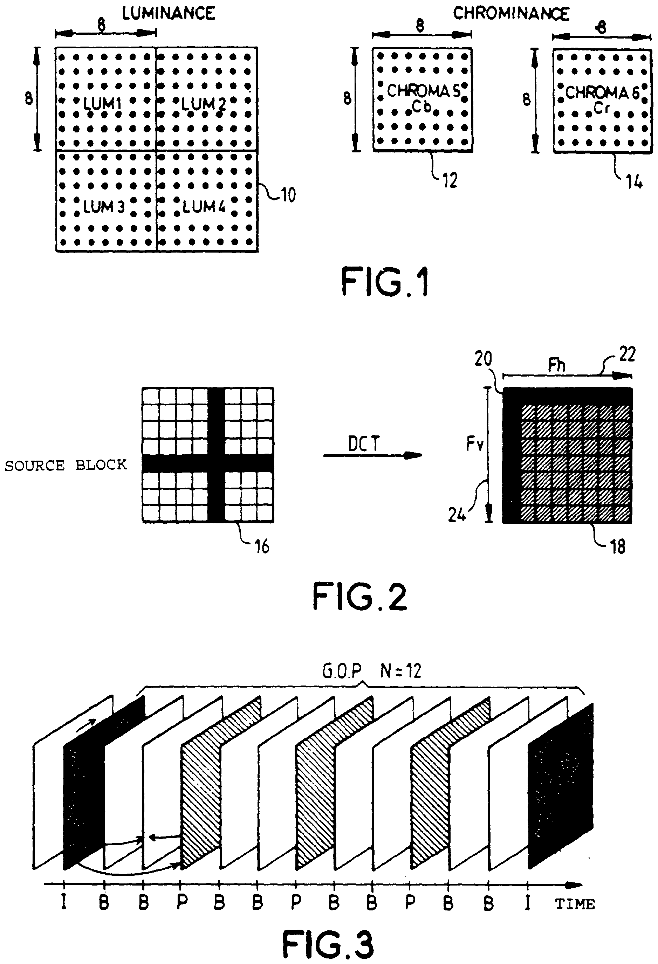

Represented in Figure 1 are four 8x8 luminance blocks, with reference 10 within the set and 8x8 chrominance blocks 12 and 14 for the blue and red chrominances respectively, the set illustrating a macroblock in the 4.2.0 norm.

Each block is coded by using a transformation denoted DCT which is a discrete cosine transformation which makes it possible to transform a luminance block (for example) into a block of coefficients representing spatial frequencies. As may be seen in Figure 2, a source block 16 is transformed into a block 18 of 8x8 coefficients. The upper left corner 20 of the block 18 corresponds to the zero spatial frequencies (mean value of the block) and, onwards of this origin 20, the horizontal frequencies increase towards the right, as represented by the arrow 22, while the vertical spatial frequencies increase from top to bottom, as represented by the arrow 24.

For each macroblock, it is necessary to choose the coding type: either "intra" or "inter". Intra-coding consists in applying the DCT transformation to a source block of the picture, while inter-coding consists in applying the DCT transformation to a block representing the difference between a source block and a predicted block, or prediction block, of a preceding or following picture.

The choice depends in part on the type of pictures to which the macroblock belongs. These pictures are of three types: the first type is the so-called I or intra type, for which the coding is intra for all the macroblocks.

The second type is of P or prediction type; in pictures of this type, the coding of each macroblock can be either intra or inter. In the case of inter-coding on a picture of P type, the DCT transformation is applied to the difference between the current macroblock of this picture P and a prediction macroblock arising from the preceding I or P picture.

The third type of picture is called B or bidirectional. Each macroblock of such a picture type is either intra-coded or inter-coded. Inter-coding consists also in applying the transformation to the difference between the current macroblock of this B picture and a prediction macroblock. This prediction macroblock may arise either from the preceding picture or from the following picture or from both at once (bidirectional prediction), it being possible for the so-called preceding or following prediction pictures to be of I or P type only.

Represented in Figure 3 is a set of pictures forming a group called a GOP (Group Of Pictures) which comprises twelve pictures, namely an I picture followed by eleven B and P pictures according to the following succession: B, B, P, B, B, P, B, B, P, B, B.

In the case of predicted pictures (that is to say those deduced from other pictures), motion estimation followed by motion compensation are applied to the macroblock to be coded. This is because, between two pictures, the macroblock may be situated at different locations by reason of the inter-picture and inter-frame motions. The effect of motion compensation is to compute the prediction macroblock according to a given mode of interpolation (commonly called the prediction mode); this macroblock will actually serve as prediction for the source macroblock in inter-picture mode for a given coding mode. Hereinafter, this prediction macroblock and, by the same token this coding mode, will be retained or rejected depending on the decisions taken within the procedure for computing the choice of the coding mode.

Moreover, in the case of interlaced scanning, for which each picture is formed of two successive frames, an odd frame and an even frame, it is necessary to determine whether the DCT transformation should be performed progressively or individually on each frame. This is because, depending on the motion of the picture or the structure of this picture, the result of the coding may be different depending on whether the transformation is performed on the picture or on each frame.

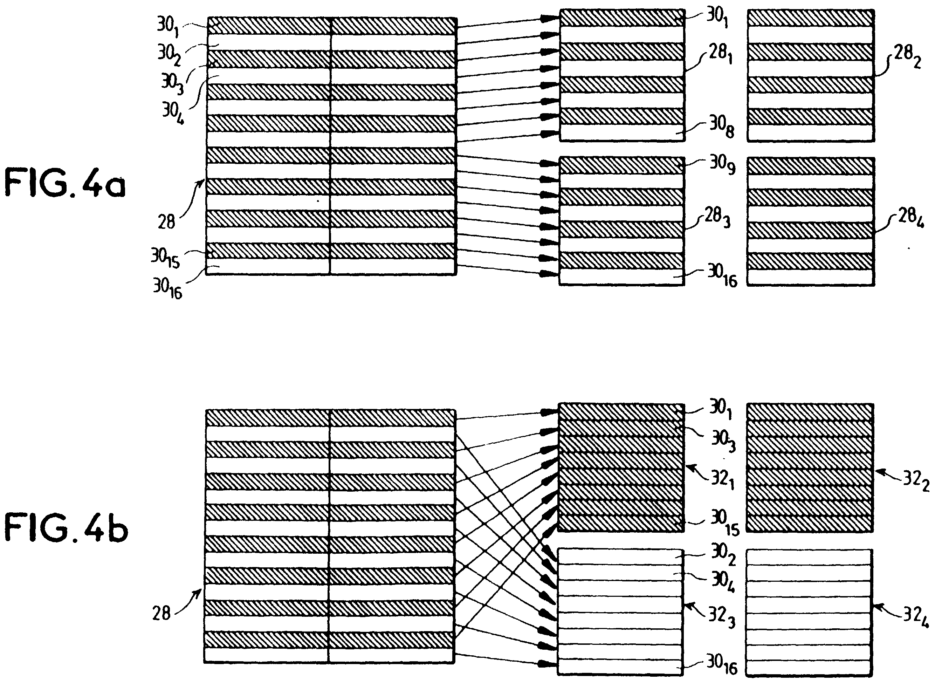

This choice is represented by Figures 4a and 4b. Represented in Figure 4a is a macroblock 28 of an interlaced picture formed of lines $30_1$, $30_3$, ... $30_{15}$ of an odd frame and of lines $30_2$, $30_4$, ..., $30_{16}$ of an even frame. Figure 4a corresponds to a DCT transformation performed on the picture; each of the four blocks of the macroblock 28 is transformed without rearranging the lines. Thus, the coding is performed on the four blocks $28_1$, $28_2$, $28_3$, $28_4$ forming the macroblock 28 and the transformation is performed on lines $30_1$ to $30_8$ for blocks $28_1$ and $28_2$ and on lines $30_9$ to $30_{16}$ for blocks $28_3$ and $28_4$.

On the other hand, Figure 4b represents a transformation performed separately for the odd and even frames. Blocks $32_1$ and $32_2$ correspond to the odd frame and blocks $32_3$ and $32_4$ to the even frame. Thus, block $32_1$ comprises lines $30_1$, $30_3$, ..., $30_{15}$, while blocks $32_3$ and $32_4$ comprise lines $30_2$, $30_4$, ..., $30_{16}$.

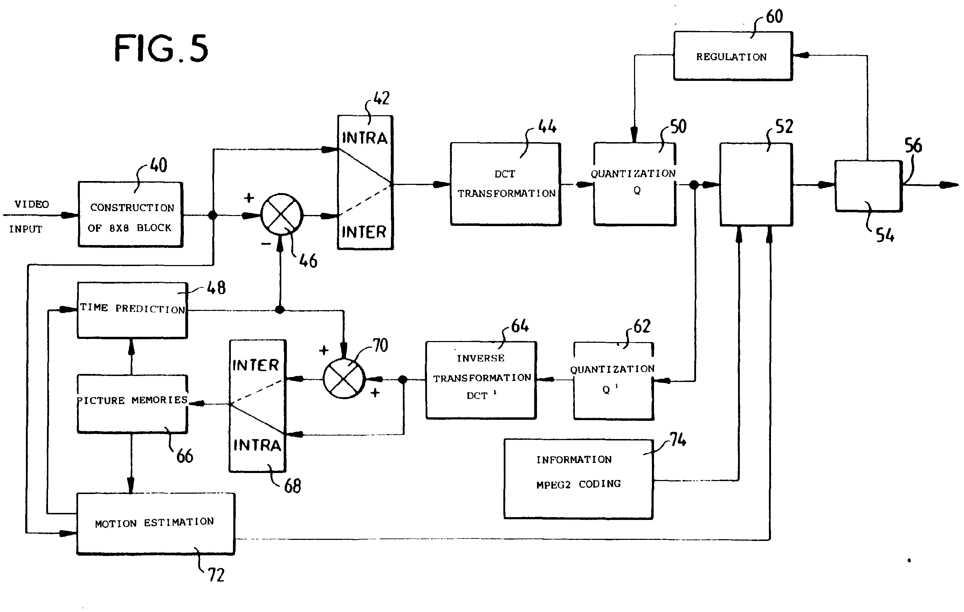

Represented in Figure 5 is a chart in block form representing the various operations to be performed in respect of the picture compression or video compression. Each digitized picture is applied to an input of a facility 40 which performs the separation into 8x8 blocks and these 8x8 blocks are transmitted to a facility 42 for selecting between the intra-coding and the inter-coding. If the coding chosen is intra, the block is transmitted to the DCT transformation facility 44. If the coding is inter, the block is subjected to a subtraction by a subtractor facility 46 which takes the differences between the block itself and a prediction block delivered by a time prediction facility 48.

After the DCT transformation 44, a quantization 50 is performed and the quantized coefficients thus obtained are coded according to a VLC coding of variable or fixed length 52. The coefficients thus coded obtained at the output of the coder 52 are directed to a buffer memory 54 whose output constitutes the coding output 56. To avoid saturation and drying up of the buffer memory 54, regulation 60 is performed which modifies the quantization 50.

To be able to perform the time prediction, the output of the quantization facility 50 is linked to the input of a facility 62 for inverse quantization $Q^{-1}$ whose output is applied to the input of a facility 64 performing the inverse cosine transformation $DCT^{-1}$. The output of the facility 64 is transmitted directly to a picture memory 66 when the coding of the block is intra, as determined by a facility 68. On the other hand, when the facility 68 decides that the coding is inter, the output of the block 64 is added, by virtue of an adder 70, to the prediction macroblock delivered by the facility 48 and it is the output from the adder 70 which is transmitted to the picture memory 66. The memory 66 keeps decoded pictures.

The inter-picture and inter-frame motions are estimated by a facility 72 which receives, on the one hand, information from the picture memory 66 and, on the other hand, from the output from the facility 40 for constructing blocks. Thus, it may be seen that the time prediction 48 is performed, on the one hand, on the basis of the picture memory 66 and, on the other hand, of the motion estimation 72.

The computation of the coding or binary train 52 depends, among other things, on the motion vectors arising from the motion estimation 72, the coded DCT coefficients, the headers of the macroblocks, and MPEG2 coding information delivered by a facility 74. This information relates to the MPEG2 signalling cues, namely the headers of the lines of macroblocks (or "slices"), the headers of the pictures of the GOPs and the headers of the sequence to be coded.

For the pictures of I type, the coding must be chosen between frame-wise intra-coding or picture-wise intra-coding. This choice is made on the basis of an analysis of the activity contained in the macroblock; it gives good results in general.

For the pictures of P type and the pictures of B type, the number of decisions to be made is substantially larger.

Thus, a P macroblock may be coded according to eight basic modes:

- intra; frame DCT,
- intra; picture DCT,
- without motion compensation (noMC); frame DCT,
- without motion compensation (noMC); picture DCT,
- with motion compensation; prediction by earlier frames; frame DCT,
- with motion compensation; prediction by earlier frames; picture DCT,
- with motion compensation; prediction by earlier picture; frame DCT,
- with motion compensation; prediction by earlier picture; picture DCT.

For the pictures of B type, 14 basic coding modes are possible, namely two intra-coding modes, the four modes with motion compensation indicated with regard to the pictures of P type and, in addition, four similar coding modes based on the later prediction picture and 4 bidirectional modes, namely:

- prediction by later frames; frame DCT,
- prediction by later frames; picture DCT,
- prediction by later picture; frame DCT,
- prediction by later picture; picture DCT,
- frame-wise bidirectional prediction; frame DCT,
- frame-wise bidirectional prediction; picture DCT,
- picture-wise bidirectional prediction; frame DCT,
- picture-wise bidirectional prediction; picture DCT.

It has been noted that the criteria used hitherto to choose between the various modes for the P and B pictures gave results of variable quality. In "Efficient RD optimized macroblock coding mode selection for MPEG-2 video encoding", Proceedings of International Conference on Image Processing, 26-29 Oct. 1997, pages 803-806, vol. 2, XP002104370, 1997, Yuen-Wen Lee et al describe a macroblock coding type selection for MPEG-2 encoding based on the Lagrangian minimization of a rate-distortion criterion.

In U.S. Patent No. 5,461,421 by Moon, the coding type generating the minimum code amount is selected.

The invention makes it possible to deliver pictures of better quality/cost ratio as compared with the pictures obtained with the known processes.

To this end, the compression process in accordance with the invention is characterized in that, for each macroblock, a trial coding is performed according to all the possible modes or according to some of these modes, and the coding cost and a quality factor are determined for each trial coding, the coding mode used being selected as a function of the value of the cost of the coding and of the value of the quality factor.

The expression "coding cost" should be understood to mean the number of bits used for each coding.

Stated otherwise, the coding mode is not chosen on the basis of an internal analysis of the macroblocks (as is the case in the prior art) but by trying all the coding possibilities (or some of them) and by retaining the mode which gives the best result, either because it minimizes the coding cost, or because it maximizes the quality of the picture, or, preferably, if it delivers the best compromise between the coding cost and the quality of the picture.

The quality factor for the picture is determined by a comparison between the source macroblock and the decoded macroblock. The latter corresponds to the macroblock subjected to a trial coding and then decoded.

In one embodiment, for each macroblock, the coding cost is determined for each coding type, the quality factor for the coding type ensuring minimum cost is compared with a mean value of quality factor over a sequence of preceding pictures contained in a sliding time window, and the coding type delivering minimum cost is selected if the corresponding quality factor is at least equal to the mean quality factor increased by an increment.

The compression process according to the invention can be used for all applications which call upon video compression of the MPEG type (MPEG1, MPEG2, MPEG4) or the like. It can be used, in particular, for the studio recording of records or magnetic tapes. It can also be used for real-time coding, for example in video cameras.

Experiments performed within the context of the invention have shown that the compression according to the invention makes it possible, for the same quality of picture, to use around 25% fewer bits than compression carried out in a conventional manner.

Other characteristics and advantages of the invention will become apparent with the description of certain of its embodiments, this description being given with reference to the appended drawings in which:

- Figures 1 to 5, already described, represent the principle of MPEG2 compression,
- Figures 6 and 7 are charts explaining certain aspects of a compression process in accordance with the invention.

In the example of compression which will be described below, all the possible coding modes (i.e. two possible modes for the pictures of I type, eight basic modes for the pictures of P type and fourteen basic modes for the pictures of B type) are considered, for each macroblock. For each of these modes, a trial coding is performed and the following parameters are subsequently determined:

- Cost C of coding the macroblock, that is to say the number of bits obtained at the conclusion of the trial coding.
- The quality factor MB_Quality of the reconstructed macroblock. How this quality factor can be determined will be explained below.
- The temporal mean value, denoted Seq.Quality, of the quality factor MB_Quality over the picture or over a sequence of pictures. Knowing this parameter may enable the possible coding overcost to be limited in the situation where the factor MB_Quality for a coding mode under consideration appreciably exceeds the value of Seq.Quality.
- A threshold, denoted overC, which depends on the type of picture under consideration (I, P or B), representing an allowable overcost of coding so as to raise the quality factor MB_Quality of the macroblock. The allowable overcost overC for a picture of I type will be greater than the allowable overcost of coding for a picture of P or B type.

The quality factor MB_Quality results from a comparison between the source macroblock to be coded, and its reconstructed counterpart for a coding mode under consideration. In the case of a criterion of PSNR type (PSNR here signifying "Picture Signal to Noise Ratio"), the squares of the pointwise differences between the source luminance pixels and the reconstructed pixels are summed (sum) and then the value of MB_Quality is calculated as follows:

$$MB\_Quality = -10 \ Log_{10} \ (sum/Lum),$$

with:

$$Lum = 255*255*256 = 16646400$$

In the case of the SNR (Signal to Noise Ratio) type criterion, the value of the parameter sum is calculated in the same way, while Lum corresponds to the sum of the values of 256 pixels contained in the source luminance block, the value of MB_Quality is likewise calculated as follows:

$$MB\_Quality = -10\ Log_{10}\ (sum/Lum)$$

Thus, the smaller the differences, the larger the quality factor.

In the example, the coding mode which delivers the minimum cost $C_{min}$ is firstly determined and the macroblock quality factor MB_Quality of minimum cost, i.e. MB_Quality$C_{min}$, is calculated.

Subsequently, we determine whether another coding mode, which, a priori, requires a coding overcost (as compared with $C_{min}$), causes an acceptable increase in the quality factor MB_Quality.

To this end, MB_Quality$C_{min}$ is compared with Seq.Quality, this being the sequence-wise mean quality factor over a specified number of preceding pictures, for example 20.

If:

$$MB\_QualityC_{min} \geq Seq.Quality + overMB\_Quality,$$

in which formula overMB_Quality represents an acceptable value of increase in the sequence-wise quality factor, so the coding mode which makes it possible to obtain the minimum cost $C_{min}$ will be chosen since broadly adequate quality is obtained with minimum cost.

This situation occurs in weakly textured zones of the picture (little information to be coded) and/or those for which the time prediction is of good quality.

If:

$$MB\_QualityC_{min} < Seq.Quality\ (1),$$

that is to say if the quality obtained with minimum cost is inadequate, then the maximum allowable overcost will be permitted.

On the other hand, in other cases, that is to say when:

$$Seq.Quality \leq MB\_QualityC_{min} < Seq.Quality + overMB\_Quality\ (2),$$

an overcost of less than overC will be permitted, this overcost being weighted by a factor S having the following value:

$$S = 1 - \frac{MB\_QualityC_{min} - Seq.Quality}{overMB\_Quality}\qquad (3).$$

Stated otherwise, a coding overcost overC' having the following value:

$$overC' = overC \times S \qquad (4)$$

is permitted.

It should be noted that, in the other cases discussed above, that is to say when:

$$MB\_QualityC_{min} \geq Seq.Quality + overMB\_Quality,$$

and when:

$$MB\_QualityC_{min} < Seq.Quality,$$

it is also possible to regard the factor S as being assigned the values 0 and 1 respectively. Stated otherwise, the factor S takes the value zero when its value resulting from formula (3) is negative and this factor S takes the value 1 when its value resulting from formula (3) exceeds 1.

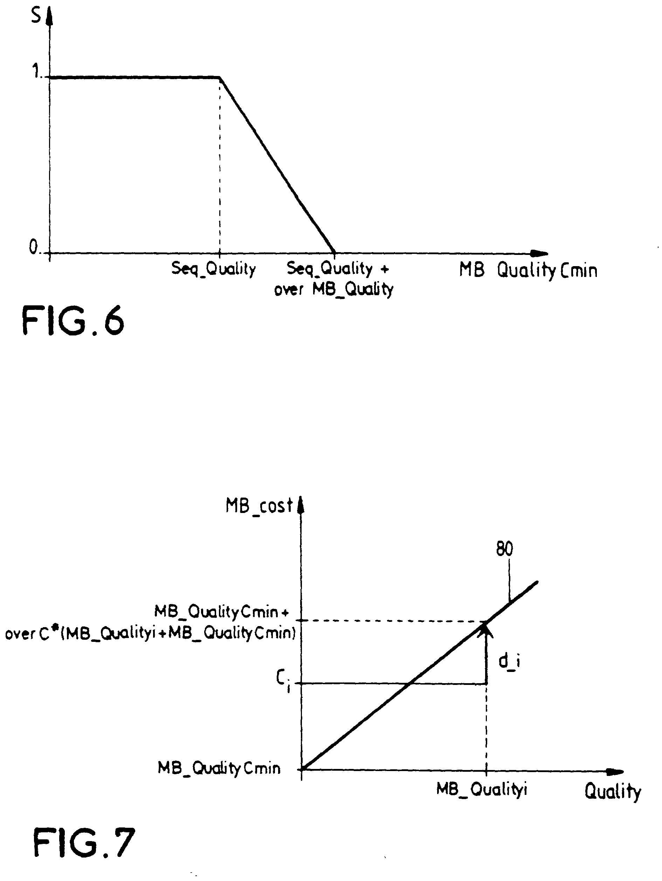

Under these conditions, the factor S can be represented by the chart of Figure 6 which forms an integral part of the present description.

When the possible coding overcost overC or overC' has been determined, the best coding cost/MB_Quality pair is sought. To this end, the following is carried out:
$MB\_Quality_i$ is compared with $MB\_QualityC_{min}$, $MB\_Quality_i$ being the quality factor for the trial coding mode under consideration of rank i.

If:

$$MB\_Quality_i = MB\_QualityC_{min},$$

we keep the coding which delivered the minimum cost $C_{min}$.

If:

$$MB\_Quality_i < MB\_QualityC_{min},$$

we also adopt the coding mode delivering the minimum cost.

On the other hand, if:
$MB\_Quality_i > MB\_QualityC_{min}$, we choose the coding mode by considering the following parameter:

$$di = C_i - [C_{min} + overC'.(MB\_Quality_i - MB\_QualityC_{min})] \quad (5).$$

In this formula, $C_i$ is the cost of the current macroblock for the trial coding represented by the index i and overC' is the allowable overcost (dependent on over_C and on S).
di therefore represents the distance between the cost of the current macroblock and the maximum possible cost.

The coding mode delivering the smallest signed value of di will be chosen.

This criterion can be represented by the chart of Figure 7 which forms an integral part of the present description. In this chart, the quality factor MB_Quality has been plotted along the abscissa and the cost $C_i$ of the current macroblock along the ordinate, the value $C_{min}$ corresponding to the origin. The straight line 80 corresponds to the maximum possible cost with regard to the increase in the value of MB_Quality. Stated otherwise, no cost/MB_Quality pair (having regard to the parameters over_C and S) which lies above the straight line 80 will be chosen.

The process described uses the parameter Seq.Quality. The latter may reasonably be calculated and used only once the steady state has been established within the coder, that is to say outside of the transient periods, for example beyond the fiftieth or hundredth coded picture of a sequence, either when the coder is set going, or after detecting a "cut" (change of sequence or of scene). Accordingly, in the coding decision procedure, during the transient periods, the parameter S takes the value 1 and, consequently, overC' = overC; stated otherwise, any overcost is limited to overC. The detecting of a cut is a piece of information which may be delivered by one of the components constituting the assembly of the picture coder. This component may be the motion estimator.

In the process described hitherto, all the coding modes are tried. In a simplified variant, to reduce the amount of calculations required, a more limited number of possibilities is tried. In one example, the choice of the parameter corresponding to the application of the DCT transformation to a frame or to a picture is excluded from the trial. To this end, this coding mode is chosen in the conventional manner. For example, local activity of the information contained in the macroblock is evaluated and, if the activity of the macroblock picture-wise is less than the activity of the macroblock frame-wise, a picture-wise DCT transformation is chosen and, in the contrary case, a frame-wise DCT transformation is chosen.

In this way, the calculations to be performed for the other choices are reduced, since the number of coding possibilities is then halved.

In the example mentioned above, in respect of which no trial coding is performed to determine whether the DCT transformation is carried out picture-wise or frame-wise, for the pictures of I type, the process for determining the coding mode is conventional, while for the pictures of P type, the number of basic coding modes is reduced to four and for the pictures of B type, the number of basic codings is reduced to seven.

The invention is not of course limited to the example described. In particular, it is not limited to the basic coding modes; it encompasses any other coding type such as, for example, the "dual prime" mode for the P pictures of the MPEG2 standard.

## Claims

1. Method for picture compression in which each picture macroblock is subjected to a selected coding type for each macroblock from among several coding types, wherein, to select the coding type to be applied to the macroblock, a cost $C_i$ and a quality factor $MB\_Quality_i$ are determined, by trial codings, for each coding type, the selection being made as a function of the values of the cost and the quality factor, said method being **characterized in that**:

   the quality factor $MB\_QualityC_{min}$ for the coding type ensuring minimum cost $C_{min}$ is compared with a mean value of quality factor, Seq.Quality, over a sequence of preceding pictures contained in a sliding time window, and the coding type delivering minimum cost is selected if the corresponding quality factor is at least equal to the mean quality factor, Seq.Quality, increased by an increment, overMB_Quality,
   else if the quality factor, $MB\_QualityC_{min}$, for the coding type ensuring minimum cost, $C_{min}$, is less than the mean quality factor, Seq.Quality, increased by an increment, overMB_Quality, a coding type is selected which gives rise to a coding overcost which does not exceed a specified value, overC, and which ensures an acceptable increase in the quality factor.

2. Method according to Claim 1, **characterized in that** the quality factor for each macroblock is determined by a comparison between the source macroblock and the decoded macroblock corresponding to the macroblock subjected to a trial coding.

3. Method according to any of Claims 1 to 2, **characterized in that** a factor for weighting the specified value of overcost, overC, is determined by the following formula:

$$S = 1 - \frac{MB\_QualityC_{min} - Seq.Quality}{overMB\_Quality},$$

   this weighting factor being held at zero when its value obtained through the above formula is negative and being held at 1 when the value resulting from this formula is greater than 1.

4. Method according to Claim 3, **characterized in that** the coding type is determined by minimizing the signed parameter di defined by the following formula:

$$di = C_i - [C_{min} + overC.S.(MB\_Quality_i - MB\_QualityC_{min})].$$

5. Method according to any one of the preceding claims, **characterized in that** the compression is of the MPEG type.

6. Method according to Claim 5, **characterized in that** it is used to select the coding type for the macroblocks of the pictures of I, P and B types.

7. Method according to Claim 5, **characterized in that** it is used to select the coding type for the macroblocks of the pictures of P and B type and not for the coding type for the macroblocks of the pictures of I type.

**Patentansprüche**

1.  Verfahren zur Bildkompression, bei dem jeder Bildmakroblock einer aus mehreren Kodierungsarten ausgewählten Kodierungsart für jeden Makroblock unterzogen wird, wobei für die Auswahl der auf den Makroblock anzuwendenden Kodierungsart ein Kostenaufwand $C_i$ und ein Qualitätsfaktor $MB\_Quality_i$ durch Versuchskodierungen für jede Kodierungsart bestimmt werden, wobei die Auswahl in Abhängigkeit von den Werten für den Kostenaufwand und den Qualitätsfaktor erfolgt, wobei das Verfahren **dadurch gekennzeichnet ist, dass**:

    der Qualitätsfaktor $MB\_QualityC_{min}$ für die Kodierungsart, die einen minimalen Kostenaufwand $C_{min}$ gewährleistet, mit einem Mittelwert des Qualitätsfaktors Seq.Quality über eine Abfolge von vorhergehenden Bildern, die in einem gleitenden Zeitfenster enthalten sind, verglichen wird, und

    die Kodierungsart, die einen minimalen Kostenaufwand liefert, ausgewählt wird, wenn der entsprechende Qualitätsfaktor wenigstens gleich dem um ein Inkrement overMB\_Quality erhöhten mittleren Qualitätsfaktor Seq.Quality ist,

    andernfalls, falls der Qualitätsfaktor $MB\_QualityC_{min}$ für die einen minimalen Kostenaufwand $C_{min}$ gewährleistende Kodierungsart geringer als der um ein Inkrement overMB\_Quality erhöhte mittlere Qualitätsfaktor Seq.Quality ist, eine Kodierungsart ausgewählt wird, die zu einem Kodierungsmehrkostenaufwand führt, der einen vorgegebenen Wert overC nicht überschreitet und der eine akzeptable Erhöhung des Qualitätsfaktors gewährleistet.

2.  Verfahren nach Anspruch 1, **dadurch gekennzeichnet, dass** der Qualitätsfaktor für jeden Makroblock durch einen Vergleich zwischen dem Quellmakroblock und dem dekodierten Makroblock, der dem einer Versuchskodierung unterzogenen Makroblock entspricht, bestimmt wird.

3.  Verfahren nach einem der Ansprüche 1 bis 2, **dadurch gekennzeichnet, dass** ein Faktor für eine Gewichtung des vorgegebenen Werts des Mehrkostenaufwands overC durch die folgende Formel bestimmt wird:

$$S = 1 - \frac{MB\_QualityC_{min} - Seq.Quality}{overMB\_Quality}$$

wobei dieser Gewichtungsfaktor auf null gehalten wird, wenn sein durch die obige Formel erhaltener Wert negativ ist, und auf 1 gehalten wird, wenn der sich aus dieser Formel ergebende Wert größer als 1 ist.

4.  Verfahren nach Anspruch 3, **dadurch gekennzeichnet, dass** die Kodierungsart bestimmt wird, indem der mit einem Vorzeichen versehene Parameter di, der durch die folgende Formel festgelegt wird, auf ein Minimum reduziert wird:

$$d_i = C_i - [C_{min} + overC.S.(MB\_Quality_i - MB\_QualityC_{min})].$$

5.  Verfahren nach einem der vorhergehenden Ansprüche, **dadurch gekennzeichnet, dass** die Kompression den Typ MPEG aufweist.

6.  Verfahren nach Anspruch 5, **dadurch gekennzeichnet, dass** es dazu verwendet wird, um die Kodierungsart für die Makroblöcke der Bilder vom Typ I, P und B auszuwählen.

7.  Verfahren nach Anspruch 5, **dadurch gekennzeichnet, dass** es dazu verwendet wird, um die Kodierungsart für die Makroblöcke der Bilder vom Typ P und B und nicht für die Kodierungsart für die Makroblöcke der Bilder vom Typ I auszuwählen.

**Revendications**

1.  Procédé de compression d'image dans lequel chaque macrobloc d'image est soumis à un type de codage sélectionné pour chaque macrobloc parmi plusieurs types de codage, dans lequel, pour sélectionner le type de codage à appliquer au macrobloc, un coût C et un facteur de qualité MB_Quality sont déterminés, par des essais de codage, pour chaque type de codage, la sélection étant effectuée en fonction des valeurs du coût et du facteur de qualité, ledit procédé étant **caractérisé en ce que** :

le facteur de qualité MB_QualityC$_{min}$ pour le type de codage garantissant le coût minimum C$_{min}$ est comparé à une valeur moyenne du facteur de qualité Seq.Quality sur une séquence d'images précédentes contenues dans une fenêtre temporelle glissante, et
le type de codage générant le coût minimum est sélectionné si le facteur de qualité correspondant est au moins égal au facteur de qualité moyen Seq.Quality, augmenté d'un incrément overMB_Quality,
sinon, si le facteur de qualité MB QualityC$_{min}$ pour le type de codage garantissant le coût minimum C$_{min}$ est inférieur au facteur de qualité moyen Seq.Quality, augmenté d'un incrément overMB_Quality, un type de codage qui donne lieu à un surcoût de codage ne dépassant pas une valeur spécifiée overC et qui garantit une augmentation acceptable du facteur de qualité est sélectionné.

2. Procédé selon la revendication 1, **caractérisé en ce que** le facteur de qualité pour chaque macrobloc est déterminé par une comparaison entre le macrobloc source et le macrobloc décodé correspondant au macrobloc soumis à un essai de codage.

3. Procédé selon l'une quelconque des revendications 1 à 2, **caractérisé en ce qu'**un facteur de pondération de la valeur spécifiée du surcoût overC est déterminé par la formule suivante :

$$S = 1 - \frac{MB\_QualityC_{min} - Seq.Quality}{overMB\_Quality},$$

ce facteur de pondération étant maintenu à zéro lorsque la valeur obtenue à l'aide de la formule ci-dessus est négative, et maintenu à 1 lorsque la valeur obtenue à l'aide de cette formule est supérieure à 1.

4. Procédé selon la revendication 3, **caractérisé en ce que** le type de codage est déterminé en minimisant le paramètre signé di défini par la formule suivante :

$$di = C_i - [C_{min} + overC.S.(MB\_Quality_i - MB\_QualityC_{min})].$$

5. Procédé selon l'une quelconque des revendications précédentes, **caractérisé en ce que** la compression est de type MPEG.

6. Procédé selon la revendication 5, **caractérisé en ce qu'**il est utilisé pour sélectionner le type de codage pour les macroblocs des images des types I, P et B.

7. Procédé selon la revendication 5, **caractérisé en ce qu'**il est utilisé pour sélectionner le type de codage pour les macroblocs des images de types P et B et pas pour le type de codage des macroblocs des images de type I.

LUMINANCE

8

8

LUM1 | LUM2

LUM3 | LUM4

CHROMINANCE

8

8

CHROMA 5
Cb

12

8

CHROMA 6
Cr

14

10

## FIG.1

SOURCE BLOCK

16

DCT →

20

Fh

22

Fv

24

18

## FIG.2

G.O.P  N=12

I  B  B  P  B  B  P  B  B  P  B  B  I  TIME

## FIG.3

FIG.4a

FIG.4b

EP 0 982 951 B1

# FIG.5

VIDEO INPUT

CONSTRUCTION OF 8X8 BLOCK — 40

INTRA / INTER — 42

DCT TRANSFORMATION — 44

QUANTIZATION Q — 50

REGULATION — 60

52

56

54

TIME PREDICTION — 48

PICTURE MEMORIES — 66

MOTION ESTIMATION — 72

INTER / INTRA — 68

INVERSE TRANSFORMATION DCT¹ — 64

QUANTIZATION Q¹ — 62

INFORMATION MPEG2 CODING — 74

46

70

EP 0 982 951 B1

S

1.

0.

Seq_Quality        Seq_Quality +        MB Quality Cmin
                   over MB_Quality

## FIG.6

MB_cost

80

MB_QualityCmin +
over C*(MB_Qualityi+MB_QualityCmin)

$C_i$

d_i

MB_Quality Cmin

MB_Qualityi        Quality

## FIG.7

**EP 0 982 951 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 5461421 A, Moon

### Non-patent literature cited in the description

• **YUEN-WEN LEE.** Efficient RD optimized macroblock coding mode selection for MPEG-2 video encoding. *Proceedings of International Conference on Image Processing,* 1997, vol. 2, 803-806